# EUROPÄISCHE PATENTANMELDUNG

(11) **EP 2 033 768 A1**
(43) Veröffentlichungstag der Anmeldung: **11.03.2009**
(21) Anmeldenummer: 07405267.1
(22) Anmeldetag: 06.09.2007
(51) Int. Cl.: B29C 65/02, B42D 15/10, B29C 65/08

(54) **Verfahren zum erneuten Verbinden von personalisierbaren Passseiten sowie Doppelnutzen hergestellt nach diesem Verfahren**

(71) Anmelder: Trüb AG, CH-5001 Aarau (CH)
(72) Erfinder: Hahn, Roland, 4600 Olten (CH)
(74) Vertreter: Groner, Manfred

(57) **Zusammenfassung**

Das Verfahren dient zum erneuten Verbinden von personalisierbaren Passseiten (1, 2'), die jeweils von einem defekten Doppelnutzen (6) abgetrennt wurden. Die miteinander zu verbindenden Passseiten (1, 2') werden in eine Aufnahmevorrichtung (11) gelegt und in dieser an Schnittflächen (3) passgenau aneinander angelegt und in der Aufnahmevorrichtung (11) fixiert. Anschliessend werden die beiden Passseiten (1, 2') an den aneinander angelegten Schnittflächen (3) stumpf miteinander verschweisst. Vorzugsweise werden die miteinander zu verbindenden Passseiten (1, 2') zwischen einem Amboss (4) und einer Schweissvorrichtung (5) festgeklemmt, wobei sich die beiden Schnittflächen (3) zwischen dem Amboss (4) und dem Schweisswerkzeug (5) erstrecken.

## Beschreibung

Die Erfindung betrifft ein Verfahren zum erneuten Verbinden von personalisierbaren Passseiten, die jeweils von einem defekten Doppelnutzen abgetrennt wurden.

Zum Herstellen von Pässen werden zunehmend Passseiten verwendet, die mit einem Laser personalisiert und elektronisch gelesen werden können. Eine Passseite dieser Art ist beispielsweise im Stand der Technik aus der EP-B-1 502 765 bekannt geworden. Die Passseiten werden nach dem Personalisieren in den Pass eingebunden. Hierbei besitzt die Passseite einen flexiblen Rand. Die Passseiten werden jeweils als Doppelnutzen hergestellt und so dem Passhersteller geliefert. Die von den meisten Passherstellern benutzten Maschinen sind so ausgelegt, dass die Passseiten jeweils nur als so genannte Doppelnutzen bearbeitet werden können. Sind die beiden Passseiten personalisiert und fertig gestellt, so werden sie mit einer Stanz- oder Schneidmaschine voneinander getrennt.

Der Aufwand des Passherstellers zum Personalisieren und Fertigstellen der Passseite ist vergleichsweise gross. Es ist für ihn deshalb wichtig, dass er einwandfreie Doppelnutzen erhält. Selbst kleine noch sichtbare Kratzer sind nicht tolerierbare Beschädigungen, die dazu führen können, dass schliesslich ein fertig gestellter Pass ausgeschieden werden muss. In der Praxis lassen sich solche Beschädigungen nicht vermeiden. Die Doppelnutzen müssen somit vor der Auslieferung genau nach solchen eventuellen Beschädigungen untersucht werden. Bisher mussten hierbei Doppelnutzen, bei denen lediglich die eine Datenseite beschädigt war, ausgeschieden werden. Die nicht beschädigte Datenseite war damit ebenfalls verloren.

Der Erfindung liegt die Aufgabe zugrunde, ein Verfahren der genannten Art zu schaffen, mit dem zwei abgetrennte aber einwandfreie Datenseiten für die Weiterverarbeitung einfach und sicher zu einem Doppelnutzen miteinander verbunden werden können. Mit dem erfindungsgemässen Verfahren soll es somit möglich sein, bei einem beschädigten Doppelnutzen die noch unbeschädigte Datenseite weiter zu verwenden.

Die Aufgabe ist bei einem gattungsgemässen Verfahren dadurch gelöst, dass die miteinander zu verbindenden Passseiten in eine Aufnahmevorrichtung gelegt und in dieser an ihren Schnittflächen passgenau aneinander angelegt und in der Aufnahmevorrichtung fixiert werden und dass anschliessend die beiden Passseiten an diesen Schnittflächen stumpf miteinander verschweisst werden.

Beim erfindungsgemässen Verfahren werden die Passseiten an den Schnittflächen und somit an den Schmalseiten der Passseiten miteinander verschweisst. Damit können Doppelnutzen hergestellt werden, die keine Erhebung aufweisen. Die Doppelnutzen nach dem Verfahren können damit mühelos gestapelt und von den üblichen Passmaschinen wie die übrigen Doppelnutzen weiterverarbeitet werden. Das erfindungsgemässe Verfahren kann automatisch oder von Hand erfolgen.

Es hat sich überraschend gezeigt, dass die mit dem erfindungsgemässen Verfahren erhaltene stumpfe Schweissverbindung zwischen den vergleichsweise schmalen Schnittflächen, die eine an sich ungünstige und bisher vermiedene Schweissverbindung darstellt, den Anforderungen bei der Weiterverarbeitung von solchen Doppelnutzen völlig genügt. Die Schweissverbindung ist nur eine vorübergehende Verbindung, da nach der Personalisierung die beiden Teile des Doppelnutzens wieder voneinander getrennt werden. Im fertig gestellten Pass ist diese Verbindung somit nicht mehr vorhanden. Das erfindungsgemässe Verfahren kann sowohl automatisch als auch von Hand durchgeführt werden. Das Verfahren eignet sich für Passseiten aus thermoplastischem Material, wie beispielsweise PVC, Polycarbonat und PETG.

Nach einer Weiterbildung der Erfindung werden die miteinander zu verbindenden Passseiten zum Verschweissen zwischen einem Amboss und einer Schweissvorrichtung festgeklemmt. Sowohl der Amboss als auch die Schweissvorrichtung erstrecken sich entlang der zu verbindenden Schnittflächen. Dies ermöglicht ein besonders exaktes und sicheres Verbinden von Passseiten.

Nach einer Weiterbildung der Erfindung ist vorgesehen, dass die Aufnahme rahmenförmig ausgebildet ist. Die beiden zu verbindenden Passseiten können in diese rahmenförmige Aufnahmevorrichtung eingelegt werden. Die beiden Passseiten können vor dem Verschweissen damit genau aufeinander ausgerichtet werden. Vorzugsweise ist der oben genannte Amboss in diese Aufnahmevorrichtung integriert. Die in die Aufnahmevorrichtung eingelegt Passseiten sind damit auch bezüglich des Ambrosses genau positioniert.

Nach einer Weiterbildung der Erfindung werden die Passseiten mit Ultraschall miteinander verschweisst. Die Schweissvorrichtung ist in diesem Fall eine so genannte Sonotrode. Diese Sonotrode überträgt eine mechanische Schwingungsenergie auf die beiden zu verbindenden Passseiten im Bereich der zu verschweissenden Schnittflächen. Die Ankoppelfläche der Sonotrode befindet sich nahe der zu verschweissenden Schnittflächen. Die Sonotrode überträgt die Ultraschallenergie auf diese Flächen, die dadurch miteinander verschweisst werden.

Nach einer Weiterbildung der Erfindung weist die Aufnahmevorrichtung wenigstens einen und vorzugsweise zwei oder mehr als zwei Niederhalter auf, mit denen die zu verbindenden Passseiten in der Aufnahmevorrichtung fixiert werden können. Diese Niederhalter sind vorzugsweise als lösbare Hebel ausgebildet, mit denen beispielsweise eine Federkraft auf die Passseiten ausgeübt werden kann. Solche Niederhalter können von Hand gespannt und auch gelöst werden. Grundsätzlich sind hier aber auch gesteuerte Niederhalter denkbar.

Die Erfindung betrifft zudem einen Doppelnutzen, hergestellt nach dem oben genannten Verfahren. Dieser Doppelnutzen besitzt zwei Passseiten, die jeweils an Schnittflächen miteinander verschweisst sind.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: schematisch eine räumliche Ansicht zweier miteinander zu verbindender Passseiten sowie ein Amboss und eine Schweissvorrichtung,
- Figur 2: schematisch eine Draufsicht auf einen Doppelnutzen,
- Fig. 3 und 4: schematisch Draufsichten auf Ausführungsvarianten erfindungsgemässer Doppelnutzen,
- Fig. 5a bis 5c: schematische Ansichten unterschiedlich zu verschweissender Stirnflächen und
- Figur 6: schematisch eine räumliche Ansicht einer Aufnahmevorrichtung mit zwei zu verbindenden Doppelnutzen sowie ein Amboss und eine Schweissvorrichtung.

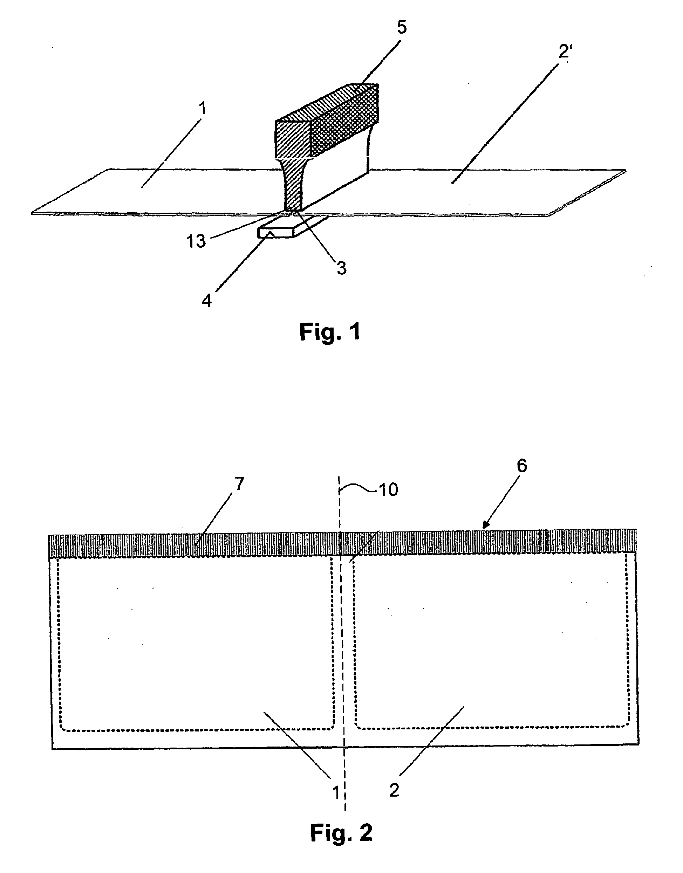

Die Figur 2 zeigt einen Doppelnutzen 6, der aus einer Passseite 1 und einer zweiten Passseite 2 besteht. Bei der Herstellung von Pässen werden diese Passseiten 1 und 2 jeweils personalisiert und auch sonst fertig gestellt. Beispielsweise kann ein hier nicht gezeigter elektronischer Speicher eingelesen werden. Nach der Fertigstellung werden diese Passseiten 1 und 2 vom Passhersteller mit einem Stanz- oder Schneidwerkzeug voneinander getrennt. Die ungefähre Trennlinie ist mit der gestrichelten Linie 10 angedeutet. Die beiden voneinander getrennten Passseiten 1 und 2 können noch weiter geschnitten und verarbeitet werden. Jeweils mit einem flexiblen Befestigungsteil 7 werden nun die fertig gestellten Passseiten 1 und 2 in das Passbüchlein eingebunden, beispielsweise eingenäht.

Ist beispielsweise die zweite Passseite 2 beschädigt, so kann sie für die Herstellung eines Passes nicht verwendet werden. Diese zweite Passseite 2 darf deshalb dem Passhersteller nicht zugestellt werden. Sie wird deshalb von der einwandfreien Passseite 1 getrennt. Diese einwandfreie erste Passseite 1 wird nun mit dem erfindungsgemässen Verfahren mit einer weiteren einwandfreien abgetrennten Passseite verbunden. Dadurch entsteht ein Doppelnutzen, der dem üblichen Doppelnutzen 6 entspricht und dem Passhersteller zugestellt und verarbeitet werden kann.

Zum Verschweissen der Passseiten 1 und 2' ist ein Schweisswerkzeug 5 vorgesehen, das mit einem Amboss 4 zusammenarbeitet. Der Amboss 4 ist so im Tisch 12 angeordnet, dass die zu verschweissenden Schnittflächen 3 sich über diesem Amboss 4 befinden. Das Schweisswerkzeug 5 ist in der Regel verstellbar und kann auf die beiden Passseiten 1 und 2' abgesenkt werden, so dass diese entlang zu verbindenden Schnittflächen 3 am Amboss 4 angepresst werden. Das Schweisswerkzeug 5 liegt hierbei mit einer streifenförmigen Stirnfläche 13 auf den beiden zu verbindenden Passseiten 1 und 2' auf.

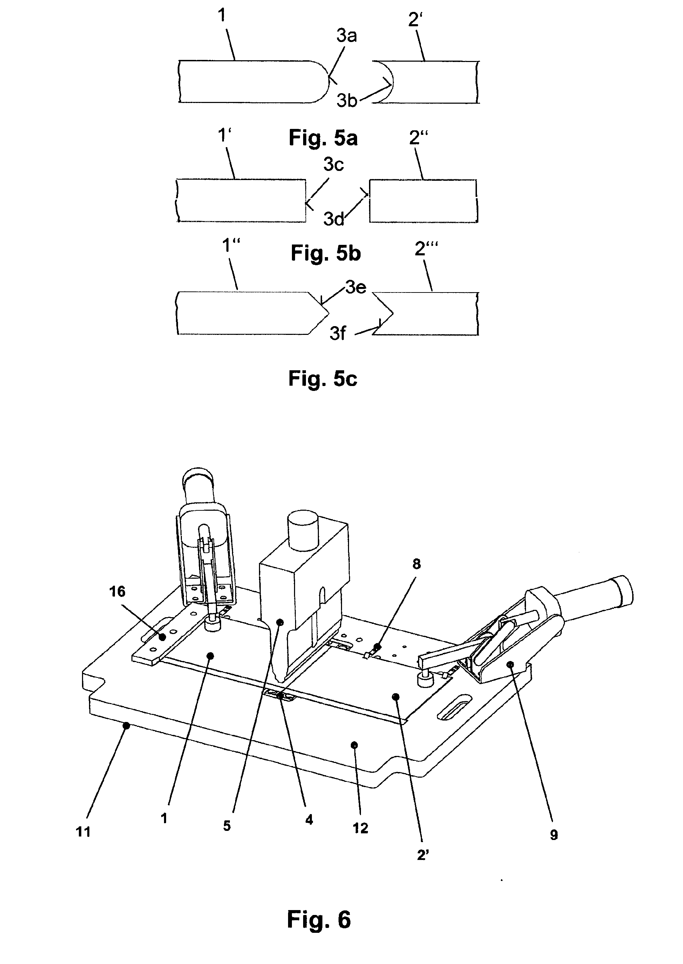

Die zu verschweissenden Stirnflächen 3 können unterschiedlich ausgebildet sein. Die Figuren 5a, 5b und 5c zeigen Ausführungsbeispiele von solchen Stirnflächen 3. Diese können mit einem geeigneten Werkzeug hergestellt, beispielsweise gefräst oder geschnitten werden. Bei der Ausführung nach Figur 5a ist eine Stirnfläche 3a gerundet konvex und eine korrespondierende Stirnfläche 3b konkav ausgebildet. Die Stirnfläche 3a greift somit in die Stirnfläche 3b ein, was die Festigkeit der Schweissverbindung erhöht. Dies gilt ebenfalls für die Stirnflächen 3e und 3f der Passseiten 1" und 2"', die wie ersichtlich keilförmig ausgebildet sind. Die Stirnfläche 3c und 3d der Passseiten 1' und 2" sind gemäss der Ausführung nach Figur 5b eben und verlaufen rechtwinklig zu den Ebenen dieser Passseiten.

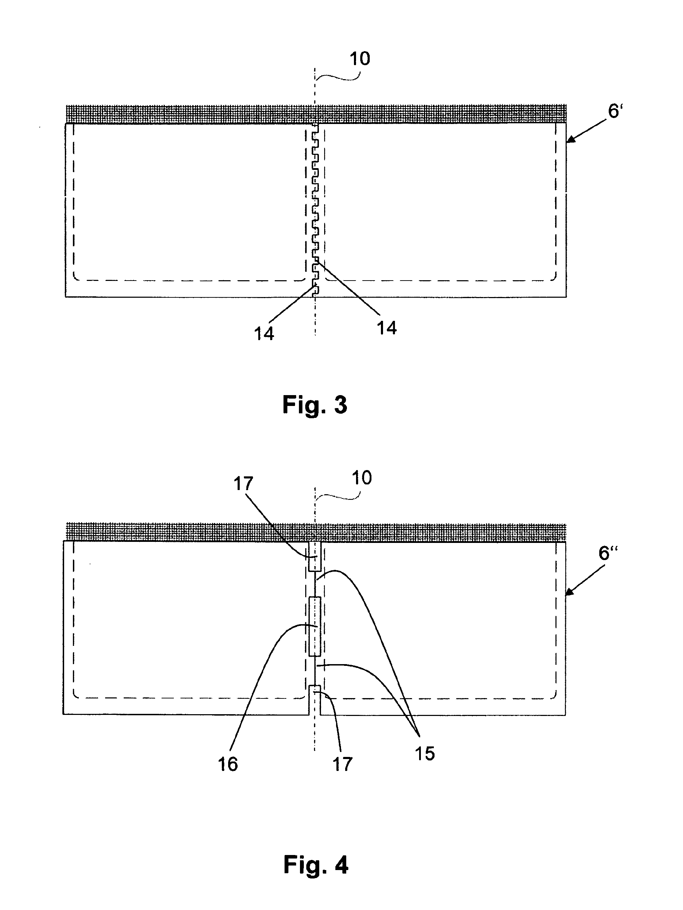

Die Stirnflächen 3a bis 3f können sich über den gesamten Bereich der Trennlinie 10 bzw. Schweissstelle erstrecken. Diese Stirnflächen 3a bis 3f können in der Ansicht gemäss der Figur 3 auch zahnförmig ausgebildet sein, so dass beim Doppelnutzen 6' Zähne 14 ineinandergreifen. Dies ermöglicht eine besonders exakte Ausrichtung der zu verschweissenden Passseiten zueinander und eine besonders hohe Festigkeit der Verschweissung. Die Stirnflächen der Zähne 14 können gemäss den Figuren 5a, 5b und 5c wahlweise eben oder ineinandergreifend ausgebildet sein.

Die Figur 4 zeigt einen Doppelnutzen 6", bei dem zwei Passseiten 1''' und 2^{iv} an zwei Schweissstellen 15 miteinander verbunden sind. Die Trennlinie 10 ist hier durch Ausnehmungen 16 und 17 unterbrochen, die beispielsweise durch Stanzen hergestellt werden können.

Das Schweisswerkzeug 5 ist vorzugsweise eine Sonotrode, die ein Verschweissen der beiden Passseiten 1 und 2' mittels Ultraschallenergie ermöglicht. Die Ankoppelung erfolgt an einer Frontfläche 13. Die Ultraschallenergie wird auf die Schnittflächen 3 übertragen, die dadurch miteinander verschweissen. Wesentlich ist, dass die Dicke des Doppelnutzens 6 im Bereich der Verschweissung nicht dicker ist als im übrigen Bereich. Der Doppelnutzen 6 aus den wieder miteinander verbundenen Passseiten 1 und 2' kann dadurch wie übliche Doppelnutzen gestapelt und verarbeitet werden. Nach dem Verschweissen wird die Schweissvorrichtung 5 vom Tisch 12 abgehoben und die beiden Niederhalter 9 werden gelöst.

Das Schweisswerkzeug 5 ist wie oben erwähnt vorzugsweise eine Sonotrode. Grundsätzlich kann das Schweisswerkzeug aber auch so ausgebildet sein, dass die Wärme nicht über Ultraschall erzeugt wird. Beispielsweise kann das Schweisswerkzeug 5 mit einer wärmezuführenden Elektrode oder mit einem Heizstempel versehen sein.

Um zwei Passseiten 1 und 2' miteinander zu verbinden, ist die in Figur 6 gezeigte Aufnahmevorrichtung 11 vorgesehen. Diese besitzt einen Tisch 12, auf dem ein für eine Positionierung der Passseiten 1 und 2' ein längliches Anschlagteil 16 sowie mehrere Klammern 8 befestigt sind. An dieser Aufnahmevorrichtung 11 werden die Passseiten positioniert. Die an der Aufnahmevorrichtung 11 positionierter Passseiten 1 und 2' werden mit Niederhaltern 9 fixiert. Diese Niederhalter 9 sind als Hebel ausgebildet und auf dem Tisch 12 befestigt. Sie besitzen jeweils einen Kopf, mit dem die beiden Passseiten 1 und 2' auf dem Tisch 12 festgeklemmt werden können. Vor dem Fixieren der Passseiten 1 und 2' werden diese auf dem Tisch 12 so aneinander gelegt, dass ihre Schnittflächen 3 (Fig. 1) aneinander liegen. An diesen Schnittflächen 3 werden die Passseiten 1 und 2' miteinander verschweisst. Nach dem Verschweissen werden die Niederhalter 9 gelöst, wonach der aus den beiden Passseiten 1 und 2' bestehende Doppelnutzen wie üblich zum Herstellen von Pässen verwendet werden kann.

### Bezugszeichenliste

- 1: erste Passseite
- 2: zweite Passseite
- 3: Schnittfläche
- 4: Amboss
- 5: Schweisswerkzeug
- 6: Doppelnutzen
- 7: Befestigungsteil
- 8: Klammern
- 9: Niederhalter
- 10: Trennlinie
- 11: Aufnahmevorrichtung
- 12: Tisch
- 13: Frontfläche
- 14: Zähne
- 15: Schweissstelle
- 16: Anschlagteil

## Patentansprüche

1. Verfahren zum erneuten Verbinden von personalisierbaren Passseiten (1, 2'), die jeweils von einem defekten Doppelnutzen (6) abgetrennt wurden, **dadurch gekennzeichnet, dass** die miteinander zu verbindenden Passseiten (1, 2') in eine Aufnahmevorrichtung (11) gelegt und in dieser an Schnittflächen (3) passgenau aneinander angelegt und in der Aufnahmevorrichtung (11) fixiert werden und dass anschliessend die beiden Passseite (1, 2') an diesen aneinander angelegten Schnittflächen (3, 3a-3f) stumpf miteinander verschweisst werden.

2. Verfahren nach Anspruch 1, **dadurch gekennzeichnet, dass** die miteinander zu verbindenden Passseiten (1, 2') zwischen einem Amboss (4) und einer Schweissvorrichtung (5) festgeklemmt werden, wobei sich die beiden Schnittflächen (3) zwischen dem Amboss (4) und dem Schweisswerkzeug (5) erstrecken.

3. Verfahren nach Anspruch 1 oder 2, **dadurch gekennzeichnet, dass** die Aufnahmevorrichtung (11) auf einem Tisch (12) befestigt ist und in den die zu verbindenden Passseiten (1, 2') passgenau eingelegt werden können.

4. Verfahren nach einem der Ansprüche 1 bis 3, **dadurch gekennzeichnet, dass** das Schweisswerkzeug (5) ein Ultraschall-Schweisswerkzeug ist.

5. Verfahren nach Anspruch 3 oder 4, **dadurch gekennzeichnet, dass** die Aufnahmevorrichtung (11) wenigstens einen, vorzugsweise zwei oder mehr Niederhalter (9) aufweist, mit denen die in der Aufnahmevorrichtung (11) positionierten Passseiten (1, 2) festgeklemmt werden können.

6. Verfahren nach einem der Ansprüche 1 bis 5, **dadurch gekennzeichnet, dass** die Aufnahmevorrichtung (11) etwa mittig einen Amboss (4) aufweist, über dem ein verstellbares Schweisswerkzeug (5) angeordnet ist.

7. Doppelnutzen hergestellt nach einem der Ansprüche 1 bis 6.

8. Doppelnutzen nach Anspruch 7, **dadurch gekennzeichnet, dass** er zwei Passseiten (1,2') aufweist, die jeweils mit Stirnseiten (3, 3a-3f) stumpf miteinander verschweisst sind.

9. Doppelnutzen nach Anspruch 8, **dadurch gekennzeichnet, dass** die Stirnseiten (3a, 3b; 3e, 3f) konvex bzw. korrespondierend konkav ineinandergreifend verschweisst sind.

10. Doppelnutzen nach Anspruch 8 oder 9, **dadurch gekennzeichnet, dass** die verschweissten Stirnseiten (3, 3a-3f) ineinandergreifende Zähne (14) aufweisen.
